# EUROPÄISCHE PATENTSCHRIFT

(11) **EP 0 703 656 B1**
(45) Veröffentlichungstag und Bekanntmachung des Hinweises auf die Patenterteilung: **17.12.1997**
(21) Anmeldenummer: 94115040.1
(22) Anmeldetag: 23.09.1994
(51) Int. Cl.: H02K 5/167, H02K 15/16

(54) **Vorrichtung zur Einstellung des Axialspiels zwischen Rotor und Stator eines Motors**
Apparatus for adjusting the axial backlash between the rotor and the stator of a motor
Appareil pour regler le jeu axial entre le rotor et le stator d'un motor

(43) Veröffentlichungstag der Anmeldung: 27.03.1996
(73) Patentinhaber: SIEMENS AKTIENGESELLSCHAFT, 80333 München (DE)
(72) Erfinder: Drexlmaier, Thomas, D-97450 Arnstein (DE)

(56) Entgegenhaltungen:
- EP-A- 0 065 585
- DE-A- 4 209 579
- DE-U- 8 914 996
- FR-A- 2 626 117

## Beschreibung

Die Erfindung bezieht sich auf eine Vorrichtung zur Einstellung des Axialspiels zwischen Rotor und Stator eines Motors gemäß Anspruch 1.

Bei einer z.B. durch die DE-C1-35 29 483 bzw. die EP-B1-0 213 427 bekannten Vorrichtung wird das Axialspiel mittels einer die Rotorwelle umfassenden Verschiebehülse eingestellt, die außenumfangsseitig in einer Ausnehmung im Kragen einer Isolierendscheibe im Preßsitz vormagaziniert gehalten ist. Um trotz der bei Massenprodukten üblichen Toleranzwerte auch bei stärkerer Pressung zwischen dem Kragen und der Verschiebehülse eine ruckfreie, definierte axiale Einstell-Bewegung gewährleisten zu können, wird die außenumfangsseitige Gleitfläche zwischen der Verschiebehülse einerseits und dem Kragen andererseits vor der Einstellung des Axialspiels mit einer Gleitflüssigkeit benetzt; vorzugsweise wird dabei als Gleitflüssigkeit eine Polyamid anlösende und nach Verdunstung des Lösungsmittels verklebende Resorcin-Lösung verwendet, so daß die aus Polyamid spritzgegossene Verschiebehülse nach der Einstellung des Axialspiels in ihrer Einstellage zusätzlich fixierbar ist.

Gemäß vorliegender Erfindung kann eine weitere Vergleichmäßigung der axialen Einstell-Bewegung der Verschiebehülse, insbesondere unter Berücksichtigung aufgrund von verstärkter axialer Anlaufkräfte notwendiger erhöhter Fixierungskräfte der Verschiebehülse in ihrer Einstellendstellung dadurch erreicht werden, daß die axial im Preßsitz auf die Rotorwelle aufgesteckte, zur Axialeinstellung verschiebbare Distanzhülse nur mit über ihre Auflagefläche verteilten, in Verschieberichtung verlaufenden Erhebungen, insbesondere in Form von Schaberippen, auf der Rotorwelle aufliegt; vorteilhafte Ausgestaltungen der Erfindung sind jeweils Gegenstand der Unteransprüche.

Bei der erfindungsgemäßen Vorrichtung zur Einstellung des Axialspiels wird zumindest ein wesentlicher Teil der Fixierungskraft der Verschiebehülse in ihrer betriebsmäßigen Einstell-Endstellung durch einen entsprechenden Preßsitz zwischen der Innenumfangsfläche der Verschiebehülse einerseits und der Außenumfangsfläche der Rotorwelle andererseits übernommen, wobei trotz dieses Preßsitzes auch unter Berücksichtigung großer Toleranzwerte eine ruckfreie, axiale Verschiebung ohne größere Verschiebekraftstreuung möglich ist.

Eine zur Erhöhung der Fixierungskraft entsprechend vergrößerte Preßkraft auch zwischen der Außenumfangsfläche der Verschiebehülse und einem diese umgreifenden Kragen einer Isolierendscheibe führt dann nicht zu unerwünschten Verschiebekraftstreuungen, wenn in bekannter Weise eine Gleitflüssigkeit zwischen der Verschiebehülse einerseits und dem Kragen andererseits eingebracht und gemäß einer Ausgestaltung der Erfindung die Oberfläche der Verschiebehülse mit eingespritzten kanalartigen Vertiefungen zur besseren, kapillaren Verteilung der Gleitflüssigkeit versehen ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: eine stirnseitige Draufsicht auf eine Verschiebehülse;
- FIG 2: einen axialen Längsschnitt durch die Verschiebehülse gemäß FIG 1;
- FIG 3: eine axiale Draufsicht auf die Verschiebehülse gemäß FIG 1,
- FIG 4: in einem axialen Teilschnitt eine bekannte Vorrichtung zur Einstellung des Axialspiels mittels einer Verschiebehülse im Kragen einer Isolierendscheibe.

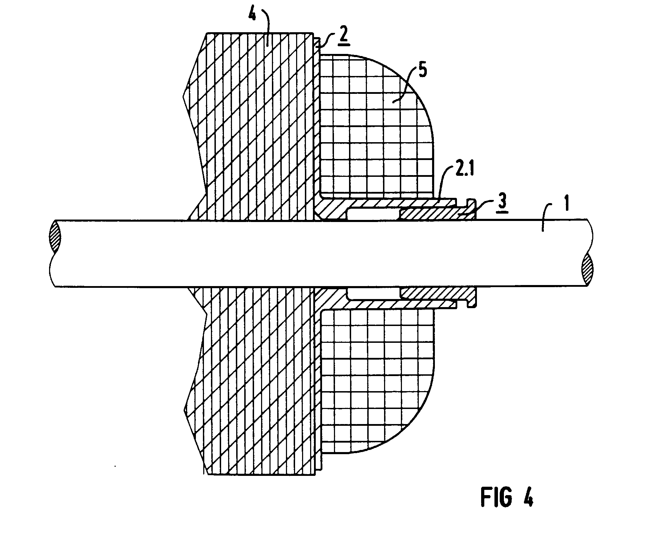

FIG 4 zeigt in einem axialen Teilschnitt den Rotor eines Elektromotors mit einem auf einer Rotorwelle 1 gehaltenen Rotorblechpaket 4. Die Wickelköpfe 5 der in Nuten des Rotorblechpaketes 4 eingebrachten Wicklung sind gegenüber der Stirnseite des Rotorblechpaketes 4 bzw. gegenüber der Rotorwelle 1 durch eine Isolierendscheibe 2 isoliert, die einen die Rotorwelle 1 umfassenden und zumindest teilweise auf dieser abgestützten Kragen 2.1 aufweist. In eine axiale, zur Rotorwelle konzentrische Ausnehmung des Kragens 2.1 der Isolierendscheibe 2 ist eine Verschiebehülse 3 zur Einstellung des Axialspiels eingesteckt; zweckmäßigerweise ist bei der Herstellung der Isolierendscheibe 2 gleichzeitig die Verschiebehülse 3 mitgefertigt und bereits durch Einpressen bis zu einer bestimmten axialen Tiefe in die Ausnehmung des Kragens 2.1 im Sinne einer Vormontageeinheit vorgefügt gehalten. Das jeweils unter Berücksichtigung der Einzeltoleranzen individuelle Axialspiel wird durch Verschieben der Verschiebehülse 3 auf der Rotorwelle 1 und durch mehr oder weniger tiefes Eintauchen der Verschiebehülse 3 in die axiale Ausnehmung des Kragens 2.1 eingestellt.

Dazu ist die Verschiebehülse 3 im Preßsitz auf die Rotorwelle 1 aufgesteckt. In der Einstellendstellung der Verschiebehülse 3 wird diese sowohl gegenüber der Rotorwelle 1 als auch gegenüber dem Kragen 2.1 der Isolierendscheibe 2 fixiert.

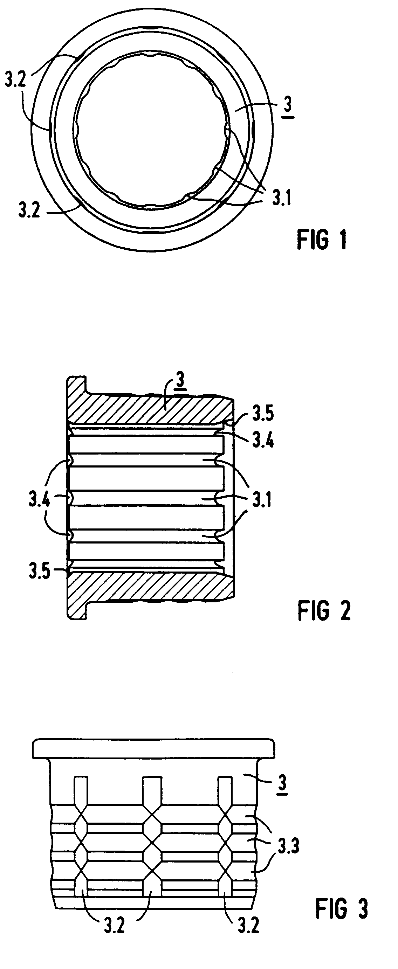

Zur Vergleichmäßigung der Einstellkräfte beim axialen Verschieben der Verschiebehülse 3 relativ zu der Rotorwelle 1 bzw. zu dem Kragen 2.1 der Isolierendscheibe 2 sind - wie aus FIG 1-3 ersichtlich - erfindungsgemäß an der Innenumfangsfläche der Verschiebehülse 3 radial vorstehende Erhebungen, insbesondere in Form von Schaberippen 3.1, als Auflagefläche zu der Rotorwelle 1 und am Außenumfang der Verschiebehülse 3 kanalartige Vertiefungen 3.2 bzw.3.3 zur kapillaren vergleichmäßigten Verteilung der eine Gleitung begünstigenden Gleitflüssigkeit vorgesehen.

Zweckmäßigerweise sind die Schaberippen 3.1 und/oder die Verschiebehülse 3 stirnseitig mit sich trichterförmig erweiternden Anschrägungen 3.4 bzw.3.5 als Zuführhilfe beim Aufstecken der Verschiebehülse 3 auf die Rotorwelle 1 vorgesehen.

Als kanalartige Vertiefungen sind vorzugsweise axiale Kanäle 3.2 bis außerhalb des Kragens 2.1 der vormagaziniert in der Isolierendscheibe 2 eingesteckten Verschiebehülse 3 derart vorgesehen, daß eine auf den außerhalb des Kragens 2.1 liegenden Bereich der Isolierendscheibe aufgetragene Gleitflüssigkeit sich trotz nur außen endseitiger Beschickungsmöglichkeit aufgrund der Kapillarwirkung der Kanäle 3.2 über die gesamte Gleitfläche zwischen dem Außenumfang der Isolierendscheibe 3 und dem Innenumfang des Kragens 2.1 der Isolierendscheibe verteilen kann; diese Verteilung wird dadurch weiter begünstigt, daß quer zu den ersten axialen Kanälen 3.2 dazu senkrecht verlaufende tangentiale Kanäle 3.3, vorzugsweise ebenfalls einstückig eingespritzt, vorgesehen sind, die im Kreuzungsbereich mit den axialen Kanälen in diese münden und damit mit diesen in Verbindung stehen.

## Patentansprüche

1. Vorrichtung zur Einstellung des Axialspiels zwischen Rotor und Stator eines Motors mittels einer zur Axialspieleinstellung auf der Rotorwelle (1) des Motors axial verschiebbaren Verschiebehülse (3), wobei die im Preßsitz auf die Rotorwelle (1) aufgesteckte Verschiebehülse (3) nur mit über ihre Auflagefläche verteilten, in Verschieberichtung verlaufenden Erhebungen, insbesondere in Form von Schaberippen (3.1), auf der Rotorwelle (1) aufliegt.

2. Vorrichtung nach Anspruch 1, mit einer Kunststoff-Verschiebehülse (3) mit einstückig angespritzten Schaberippen (3.1).

3. Vorrichtung nach Anspruch 1 und/oder 2, mit stirnseitigen Anschrägungen (3.4;3.5) der Schaberippen (3.1) bzw. der Verschiebehülse (3) im Sinne einer trichterförmigen Zuführhilfe beim Aufstecken der Verschiebehülse (3) auf die Rotorwelle (1).

4. Vorrichtung nach zumindest einem der Ansprüche 1-3 mit einer außenumfangsseitig in einem Statorteil, insbesondere in einer axialen Ausnehmung eines axial vorstehenden Kragens (2.1) einer Isolierendscheibe (2), unter Vermittlung einer Schmier- bzw. Klebeflüssigkeit verschiebbaren und fixierbaren Verschiebehülse (3), wobei die Verschiebehülse (3) mit, vorzugsweise eingespritzten, kanalartigen Vertiefungen (3.2;3.3) im Sinne einer außenflächigen Verteilung der Schmier- bzw. Klebeflüssigkeit durch Kappilarwirkung versehen ist.

5. Vorrichtung nach Anspruch 4 mit im wesentlichen axialen ersten Kanälen (3.2).

6. Vorrichtung nach Anspruch 4 und/oder 5 mit im wesentlichen tangentialen, insbesondere durch Kreuzungen mit den ersten Kanälen in Verbindung stehenden, zweiten Kanälen (3.3).

7. Vorrichtung nach zumindest einem der Ansprüche 4-6 mit sich axial bis außerhalb des Kragens (2.1) der Isolierendscheibe (2) erstreckenden ersten Kanälen (3.2).

## Claims

1. Apparatus for adjusting the axial backlash between the rotor and the stator of a motor by means of a sliding sleeve (3) which can be displaced axially on the rotor shaft (1) of the motor in order to adjust the axial backlash, the sliding sleeve (3), which is pressfitted onto the rotor shaft (1), resting on the rotor shaft (1) only by means of raised portions, in particular in the form of scraper ribs (3.1), which are distributed over its contact surface and run in the direction of displacement.

2. Apparatus according to Claim 1, with a plastic sliding sleeve (3) with integrally moulded scraper ribs (3.1).

3. Apparatus according to Claim 1 and/or 2, with end chamfers (3.4;3.5) on the scraper ribs (3.1) and the sliding sleeve (3) to provide a funnel-shaped insertion aid during the mounting of the sliding sleeve (3) on the rotor shaft (1).

4. Apparatus according to at least one of Claims 1-3 with a sliding sleeve (3) which can be displaced and fixed at its outer circumference in a stator part, in particular in an axial recess in an axially projecting collar (2.1) of an insulating end disc (2), using a lubricating and adhesive fluid, the sliding sleeve (3) being provided with channel-like depressions (3.2;3.3), preferably moulded in, to give distribution of the lubricating and adhesive fluid on the outer surface by capillary action.

5. Apparatus according to Claim 4 with essentially axial first channels (3.2).

6. Apparatus according to Claim 4 and/or 5 with essentially tangential second channels (3.3), in particular second channels connected by intersections to the first channels.

7. Apparatus according to at least one of Claims 4-6 with first channels (3.2) extending axially to outside the collar (2.1) of the insulating end disc (2).

## Revendications

1. Dispositif de réglage du jeu axial entre le rotor et le stator d'un moteur au moyen d'un manchon (3) coulissant axialement pour régler le jeu axial sur l'arbre (1) rotorique du moteur, le manchon (3) coulissant emmanché en ajustement serré sur l'arbre (1) rotorique ne reposant sur l'arbre (1) rotorique que par des ressauts, notamment en forme de nervures (3.1) de grattage, s'étendant dans la direction de coulissement, répartis sur sa surface de support.

2. Dispositif suivant la revendication 1, comportant un manchon (3) coulissant ayant des nervures (3.1) de grattage obtenues d'un seul tenant par injection.

3. Dispositif suivant la revendication 1 et/ou 2, comportant des biseautages (3.4; 3.5) frontaux des nervures (3.1) de grattage et du manchon (3) coulissant, en vue de former un moyen auxiliaire d'amenée en forme d'entonnoir lorsque l'on emmanche le manchon (3) coulissant sur l'arbre (1) rotorique.

4. Dispositif suivant au moins l'une des revendications 1 à 3, comportant un manchon (3) coulissant et pouvant être immobilisé, moyennant l'apport d'un liquide formant lubrifiant et formant colle, du côté du pourtour extérieur dans une pièce statorique, notamment dans un évidement axial d'un collet (2.1) faisant saillie axialement d'un disque (2) isolant, le manchon (3) coulissant étant muni de renfoncements (3.2; 3.3) du type de canaux, de préférence obtenus par injection, en vue, par capillarité, d'une répartition à la surface extérieure du liquide formant lubrifiant et formant colle.

5. Dispositif suivant la revendication 4, comportant des premiers canaux (3.2) dirigés sensiblement dans la direction axiale.

6. Dispositif suivant la revendication 4 et/ou 5, comportant des deuxièmes canaux (3.3) dirigés sensiblement dans la direction tangentielle, notamment communiquant par des intersections avec les premiers canaux.

7. Dispositif suivant au moins l'unes des revendications 4 à 6, comportant des premiers canaux (3.2) s'étendant axialement jusqu'à l'extérieur du collet (2.1) du disque (2) isolant.
